# EUROPEAN PATENT APPLICATION

(11) **EP 3 937 503 A1**
(43) Date of publication of application: **12.01.2022**
(21) Application number: 20184566.6
(22) Date of filing: 07.07.2020
(51) Int. Cl.: H04N 21/422, H04N 21/482, G10L 15/22, H04N 21/2343

(54) **AUDIO DATA PROCESS**

(71) Applicant: Open Products, Networks & Software, 1060 Saint-Gilles (BE)
(72) Inventor: BOITEL, Marc, 1060 Saint-Gilles (BE); JASPARD, Benjamin, 1060 Saint-Gilles (BE); ADLINE, Stéphane, 1060 Saint-Gilles (BE)
(74) Representative: Gevers Patents

(57) **Abstract**

The present invention relates to an audio data process (1) to determine from which audio channel (100a, 100b) an audio content (101) played on or around a media device (20) comes from. The process involves to determine first audio fingerprints (1103a, 1103b, 2103a, 2103b) based on broadcasted audio contents (1101a, 1101b, 2101a, 2101b) broadcasted by the audio channel (100a, 100b), and to match one of them with a second audio fingerprint (105) based on the audio content (101) played on or around the media device (20).

## Description

### Field of the invention

The present invention relates to audio data process, and specifically, to audio data classification.

### Background of the invention

There is a need, in the field of media broadcast, to quickly obtain accurate information about the actual listening or viewing of broadcast channels, for example to allow broadcasters to collect technical and statistic information while determining at same time the range of broadcasting of channels, or possible failures in the broadcasting technical means.

### Summary of the invention

An object of the invention is to determine the audio channel that is actually played on or around a media device.

The invention relates to a process for classifying a played audio content, and comprising the following steps:
(a) receiving, on an analyzing system, a plurality of broadcasted audio contents, each broadcasted audio content corresponding to an audio channel,
(b) obtaining, on the analyzing system, a plurality of first timestamps, wherein each first timestamp corresponds to a broadcasting time of one of the broadcasted audio contents,
(c) processing, on the analyzing system, the broadcasted audio contents in order to determine a plurality of first fingerprints, each of the first fingerprints corresponding to one of the broadcasted audio contents and to one of the first timestamps,
(d) recording, on a media device, the played audio content,
(e) recording, on the media device, a second timestamp, which is a timestamp of the recording step of the played audio content,
(f) processing, on the media device, the played audio content in order to determine a second fingerprint,
(g) transmitting, from the media device to the analyzing system, the second timestamp and the second fingerprint,
(h) determining a match between the played audio content and one of the broadcasted audio contents by comparing, on the analyzing system), the second fingerprint with at least part of the plurality of first fingerprints, wherein only the first fingerprints having a corresponding first timestamps in a time window with respect to the second timestamp are taken into account, and classifying the played audio content as a match to the audio channel corresponding to the matched broadcasted audio content.

In the process according to the invention, the audio contents broadcasted on several audio channels are processed to determine first fingerprints, which are compared to a second fingerprint resulting from the played audio content. It is thus very easy to determine the audio channel that is actually played on or around the media device. The inventors have found that the level of accuracy is excellent, even when there is noise around the media device.

In the invention, if a given first timestamp is outside a time window that includes the second timestamp, the first fingerprint corresponding to said given first timestamp cannot be considered as a match. The use of such a time window prevents false positive matches in case of rebroadcast of a show or a song.

The matching between the played audio content and one of broadcasted audio contents provides also, from the second timestamp, the time at which the audio channel was actually played on or around the media device. It is therefore possible to determine the time shift between the first and the second timestamps, which provides an indication of the time shift between the actual broadcast from the broadcasting system and the actual recording on the media device.

Moreover, since the process of generating the fingerprint from the audio content is irreversible, the analyzing system does not get any knowledge of the noise on the surroundings of the media device. The privacy of the user of the media device is thus respected.

The size of the second fingerprint being smaller than the size of the file comprising the recorded played audio content as stored on the memory of the media device, the transmission of the second fingerprint is faster and less cumbersome than a transmission of the file comprising the recorded played audio content.

The determination of the first fingerprints may be heavy, especially if it is done continuously and for many audio channels. It is therefore especially interesting to have that step performed by the analyzing system and not by the media device.

The invention may for example be used to monitor the listening of a given audio channel, and thus failure in broadcasting technical means. Indeed, if it appears that all listening for a web (respectively fm) channel stops, it probably indicates a failure in the web (respectively fm) broadcasting technical means. The invention may also be used in the framework of audience monitoring. For example, if it appears that a given TV channel has a large amount of viewers every day at a given time, additional technical resources (more bandwidth, more computational power, more emitters,...) can be allocated to that TV channel at that time. The invention allows also broadcasters to make their media more dynamic by adapting their contents, playlist and schedules according to the measured listener habits and behaviors.

A profile of a listener can also be determined. It is thus possible to observe that many listeners switch from a listening by radio to a web listening around 9 am when they arrive at work, and thus the technical resources can be reallocated from radio to web every morning. Having a "no-match" as an output is also interesting since it means that the listener is not listening to any of the considered audio channels.

In the frame of the present document, an "audio content", which may also be called "audio signal", is a signal that provides audio information. It may be for example sound (i.e. an acoustic wave) or data, preferably digital data, encoding sound. Each audio content is broadcasted on a corresponding audio channel. An audio content may be an audio-visual content. A "played audio content" is an audio content that is played on or around a media device. When it is played on the media device, the media device can record it directly, without microphone. When it is played around the media device, the media device records it with the microphone. There can be noise, for example coming from the surroundings or from electronic components, present in the recorded played audio content.

In the frame of the present document, an "audio channel" provides audio content, and may also provide video content. It is preferably a radio channel or a tv channel. It can be broadcasted for example, over the air, by cables, via a radio network (FM, AM, DAB, HDRadio,...), via a TV network, and/or via internet. It can be broadcasted by analog transmission means, and/or by digital transmission means.

In the frame of the present document, an "analyzing system" is an electronic system comprising one or several computing unit(s) at one or several places. It can include computer(s), server(s). Part(s) can be in the cloud. It can be a webservice. It can include a unit for monitoring and/or restreaming at least some of the broadcasted audio contents.

In the frame of the present document, a "timestamp" is linked to an audio content because the timestamp gives, at least approximately, the broadcasting time of said audio content. It can be the beginning of the audio content, the middle, or the end for example. Because of delays in the broadcasting means, there can be a shift between the timestamp of a played audio content (second timestamp) and the timestamp the matched broadcasted audio content (first timestamp).

In the frame of the present document, a "fingerprint" is digital data making possible to uniquely identify an audio content.

In the frame of the present document, a "media device" is an electronic device. The media device is preferably in one bloc or made of several blocs mechanically connected. It is preferably a portable device, like a mobile phone or a tablet. The media device is preferably less than 0,5 kg. Its length is preferably less than 15 cm, its width less than 10 cm, and its thickness less than 1 cm. The media device is preferably not dedicated to the process according to the invention: the steps of the process according to the invention can be implemented on an application running on most mobile devices.

In the frame of the present document, a "broadcasting system" is an electronic system comprising one or several computing unit(s) at one or several places. It can include computer(s), server(s). Part(s) can be in the cloud. It may belong to a plurality of media companies, like a TV and/or radio company. It can include the analyzing system.

The plurality of broadcasted audio contents is preferably received in a continuous way on the analyzing system. During the processing in order to determine a plurality of first fingerprints, the plurality of broadcasted audio contents is preferably divided into blocks, each block being one of the broadcasted audio contents, and each block providing one of the first fingerprints.

The plurality of broadcasted audio contents may be received by the analyzing system by being recorded from the channels. In such a case, the first timestamps are preferably obtained by being recorded when the analyzing system records the corresponding broadcasted audio content. For example, the analyzing system may receive a TV channel in a standard way, record a broadcasted audio content from the TV channel, and record the first timestamp as the time when the recording of the broadcasted audio content has started.

The plurality of broadcasted audio contents and the plurality of first timestamps may be sent as computer files to the analyzing system. For example, a TV company may send to the analyzing system some audio content that is going to be broadcasted in the coming days, with first timestamps providing the broadcasting times.

In an embodiment, a geolocation of the media device is recorded on the media device at step (e) and transmitted at step (g) from the media device to the analyzing system. This is especially useful to determine a failure of broadcasting technical means. For example, if all listening of a given fm radio stops in a given area, it might relate to a technical problem at the antenna corresponding to that area. The geolocation information is also interesting for national broadcasters that broadcast the same audio content on several emitters.

In an embodiment, the analyzing system generates at least part of a map of broadcasting areas of the audio channel based on the classification obtained by step (h) and on the geolocation.

In an embodiment, the geolocation is also taken into account in the determination of a match at step (h). For example, if it is known that a given audio channel is not transmitted in a given area, all first fingerprints originating from said given audio channel can be excluded from the comparison.

In an embodiment, at step (h), the analyzing system determines several possible matches between the played audio content and several of the broadcasted audio contents, each match having a weight that indicates the similarity between the second fingerprint and the first fingerprints. This feature can help to analyze further the results. For example, if a same error appears in the classification, the weight will indicate the "second choices" amongst the broadcasted audio contents, which will help to locate the problem causing the error.

In an embodiment, during the determination at step (h), the analyzing system takes into account outputs of the process performed on at least one other, preferably former, more preferably directly former, played audio content. For example, if the process carried out on a former played audio content recorded directly before the played audio content under process, determined a match with a given audio channel, the weight for said given audio channel (or for the corresponding first fingerprints) is increased.

In an embodiment, the broadcasted audio contents are recorded continuously on the analyzing system. They are thus divided into samples that form the individual broadcasted audio contents.

In an embodiment, the determination of a match at step (h) includes, in this order:
- a first selection of the first fingerprints having their first timestamp within an interval with respect to the second timestamp, and
- a second selection, amongst the first fingerprints selected by the first selection, using a comparison with the second fingerprint.

In other words, if the time interval between a given first timestamp and the second timestamp is higher than a threshold, the first fingerprint corresponding to said given first timestamp is not selected. This means that the time window is symmetrical with respect to the second timestamp.

In an embodiment, the played audio content is automatically deleted from the media device after step (f), and preferably before step (g). This saves place on the memory of the media device.

In an embodiment, the broadcasted audio contents are samples of sound having a duration between 1 second and 1 hour, preferably between 2 seconds and 10 minutes, more preferably between 3 seconds and 3 minutes. Such a duration is long enough to obtain a good accuracy in the matching, and short enough to be easily processed. The analyzing system preferably records continuously the broadcasted audio contents, i.e., without interruption.

In an embodiment, the played audio content is a sample of sound having a duration of between 1 second and 1 hour, preferably between 2 seconds and 10 minutes, more preferably between 3 seconds and 3 minutes. Such a duration is long enough to obtain a good accuracy in the matching, and short enough to be easily processed.

In an embodiment, the samples of sound including the played audio content are automatically recorded intermittently. In other words, there are time gaps between the recordings. The recordings can be done according to a schedule sent by the analyzing system 10 to the media device 20. For example, the frequency of recordings can be lower between some hours of the day, typically between 2am and 6 am. It can be increased if it is been detected that an audio channel is played.

In other words, there are time gaps between the recordings. The recordings can be done according to a schedule sent by the analyzing system to the media device. For example, the frequency of recordings can be lower between some hours of the day, typically between 2 am and 6 am. The frequency can be increased if it is been detected that an audio channel is played.

In an embodiment, several second timestamps and second fingerprints are stored on a memory of the media device before being transmitted from the media device to the analyzing system. Indeed, because the second timestamp is known, a delay does not matter. This can be interesting to transmit the data only when the media device is connected to a given wireless system, Wi-Fi for example. It is also possible to send several second timestamps and second fingerprints every day at the same time.

In an embodiment, the recording, on the media device, of the played audio content is done with a microphone of the media device. This embodiment is preferably used when the played audio content is played around the media device, by another device than the media device.

In an embodiment, the recording, on the media device, of the played audio content, is done directly from the data providing the sound. The recording is done without microphone, through the audio output of a first application running on the media device and playing the played audio content. For example, the first application can be a web radio application or a radio and/or TV application receiving said data by streaming. A second application running on the media device records the data representing the sound from the audio output of the first application that plays said sound. This embodiment is preferably used when the played audio content is played from the media device.

The invention also relates to an analyzing comprising means for carrying out steps (a), (b), (c) and (h) of a process according to any embodiment of the invention.

The invention also relates to a data processing arrangement comprising said analyzing system, and a media device comprising means for carrying out steps (d), (e), and (f) of a process according to any embodiment of the invention, the data processing arrangement being suitable for carrying out step (g).

The invention also relates to a computer program product comprising instructions which, when the program is executed by an analyzing system, cause the analyzing system to carry out steps (a), (b), (c) and (h) of a process according to any embodiment of the invention, and a computer-readable data carrier having stored thereon said computer program product.

The invention also relates to a second computer program product comprising instructions which, when the program is executed by a data processing arrangement, cause the data processing arrangement to carry out the process of any embodiment of the invention, and relates to a computer-readable data carrier having stored thereon said second computer program product.

### Brief description of the Figures

For a better understanding of the present invention, reference will now be made, by way of example, to the accompanying drawings in which:
- Figure 1 is a block diagram showing several data processing systems used in an embodiment of the invention;
- Figure 2 is a block diagram showing some components of the media device used in an embodiment of the invention;
- Figure 3 is a block diagram showing some pieces of software run by the media device in an embodiment of the invention;
- Figure 4 is a block diagram sketching the temporal distribution of broadcasted audio contents in an embodiment of the invention;
- Figure 5 is a flowchart of a process according to an embodiment of the invention; and
- Figure 6 is a flowchart of a determination step according to an embodiment of the invention.

### Description of the invention

The present invention will be described with respect to particular embodiments and with reference to certain drawings but the invention is not limited thereto. The described functions are not limited by the described structures. The drawings described are only schematic and are non-limiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

On the Figures, identical or analogous elements may be referred by a same number.

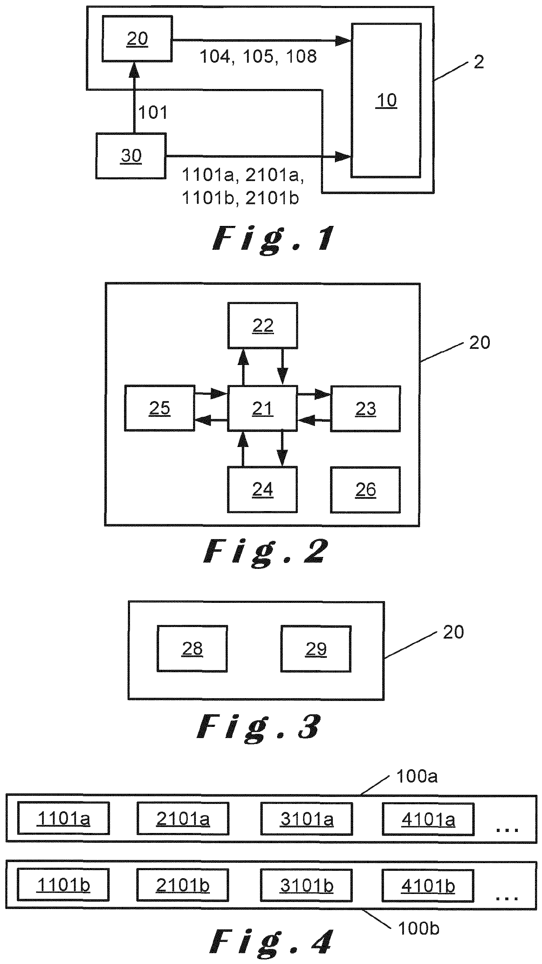

Figure 1 is a block diagram showing several data processing systems 10, 20, 30 used in an embodiment of the invention. The invention involves an analyzing system 10, a media device 20, and, preferably, a broadcasting system 30. The analyzing system 10 and media device 20 can be considered as forming a data processing arrangement 2. Any of the data processing systems 10, 20, 30 may include logic carry out by a processor, a central processing unit (CPU), a digital signal processor 30 (DSP), an application-specific integrated circuit (ASIC), a field-programmable gate array (FPGA), or the like, or any combinations thereof, and can include discrete digital or analog circuit elements or electronics, or combinations thereof.

The broadcasting system 30 transmits a plurality of broadcasted audio contents 1101a, 1101b, 2101a, 2101b around. They are received by the analyzing system 10. At least one of the broadcasted audio contents 1101a, 1101b, 2101a, 2101b is also received by the media device 20 because it is played by or around the media device 20, and is thus called the played audio content 101. The played audio content 101 preferably in a sound around or created by the media device 20, for example on a headset connected to the media device 20.

The played audio content 101 is recorded by the media device 20, together with a second timestamp 104 which provides the time of the recording of the played audio content 101, and preferably with the geolocation 108 of the media device 20 at the time of the playing of the played audio content 101. From the played audio content 101, a second fingerprint 105 is determined by the media device 20. The second timestamp 104, second fingerprint 105 and geolocation 108 are thus transmitted from the media device 20 to the analyzing system 10.

Figure 2 is a block diagram showing some components of the media device 20 used in an embodiment of the invention. The media device 20 preferably comprises a processor 21, a microphone 22, a geolocation module 23 (for example a GPS), a communication module 24, a clock 25, and a memory 26. It includes means to generate sound from data that is read by the processor 21, for example speakers and/or an output for headset (by a jack or Bluetooth for example). Said data are preferably obtained by streaming.

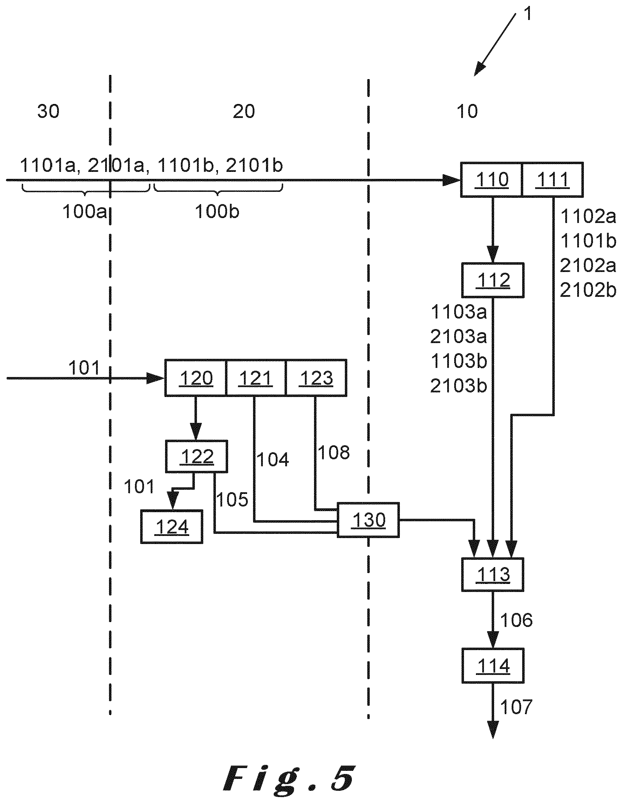

Figure 3 is a block diagram showing some pieces of software run by the media device 20 in an embodiment of the invention. The media device 20 may run a first application 28 that plays the data, preferably obtained by streaming, providing the played audio content 101. It may be a web radio application or a radio and/or TV application, for example. The media device 20 preferably run a second application 29 that performs the following steps, described later with reference to Figure 5:
- recording 120 the played audio content 101,
- recording 121 the second timestamp 104,
- processing 122 the played audio content 101 in order to determine the second fingerprint 105,
- sending the second timestamp 104 and the second fingerprint 105 to the analyzing system 10.

In an embodiment of the invention, the functionalities of the second application 29 are, partially or fully, integrated in the first application 28. For example, a web radio application can include instructions to automatically perform steps 120 and 121.

Figure 4 is a block diagram sketching the temporal distribution of broadcasted audio contents in an embodiment of the invention. The top block represents a first audio channel 100a, which, in time, broadcasts successively the broadcasted audio contents 1101a, 2101a, 3101a, 4101a,...The bottom block represents a second audio channel 100b, which, in time, broadcasts successively the broadcasted audio contents 1101b, 2101b, 3101b, 4101b,...

Figure 5 is a flowchart of a process 1 according to an embodiment of the invention.

The plurality of broadcasted audio contents 1101a, 1101b, 2101a, 2101b, broadcasted from the broadcasting system 30 on several audio channels 100a, 100b, is received 110 at the analyzing system 10. Each broadcasted audio content 1101a, 1101b, 2101a, 2101b corresponds to a single audio channel 100a, 100b, and the correspondence between broadcasted audio contents 1101a, 1101b, 2101a, 2101b and audio channels 100a, 100b is recorded by the analyzing system 10. The broadcasted audio contents 1101a, 1101b, 2101a, 2101b are preferably recorded continuously and then divided into the broadcasted audio contents 1101a, 1101b, 2101a, 2101b in order to determine the first fingerprints.. The broadcasted audio contents 1101a, 1101b, 2101a, 2101b may have different durations from each other's.

A plurality of first timestamps 1 102a, 1102b, 2102a, 2102b is obtained 111 and recorded by the analyzing system 10. Each first timestamp 1102a, 1102b, 2102a, 2102b corresponds to a broadcasting time of one of the broadcasted audio contents 1101a, 1101b, 2101a, 2101b, and their correspondence is also recorded by the analyzing system 10.

The analyzing system 10 processes 112 the broadcasted audio contents 1101a, 1101b, 2101a, 2101b and thus determines a plurality of first fingerprints 1103a, 1103b, 2103a, 2103b. Each first fingerprint 1103a, 1103b, 2103a, 2103b correspond to only one broadcasted audio content 1101a, 1101b, 2101a, 2101b, and each broadcasted audio content 1101a, 1101b, 2101a, 2101b correspond to only one first fingerprint 1103a, 1103b, 2103a, 2103b. There is thus also a correspondence between first fingerprint 1103a, 1103b, 2103a, 2103b and 1102a, 1102b, 2102a, 2102b, which is recorded by the analyzing system 10.

One of the broadcasted audio contents 1101a, 1101b, 2101a, 2101b, called the played audio content 101, is received by the media device 20. For example, it can be received by the media device 20 because it is played by it, preferably with the first application 28 (Figure 3); or it can be received by the media device 20 because it is played around it, with the media device 20 or another device. When the played audio content 101 is played, the media device 20 records 120 it on its memory 26 (Figure 2). At the same time, it records 121 the second timestamp 105, and it preferably records 123 the geolocation 108.

In an embodiment of the invention, the played audio content 101 is recorded as a sample of sound having a duration of between 1 second and 1 hour, preferably between 2 seconds and 10 minutes, more preferably between 3 seconds and 3 minutes. The samples of sound are automatically recorded intermittently. For example, there can be a schedule of recordings, or a sample of sound recorded every X minutes, with X between 1 and 120. This is typically sufficient to determine whether an audio channel is played, and which one, and avoid too large amount of data. The duration of the recorded played audio content 101 does not have to be the same as the duration of the broadcasted audio contents 1101a, 1101b, 2101a, 2101b.

The invention considers at least two ways to record 120 the played audio content 101. Preferably, the media device 20 is able to perform both ways. The first way to record 120 the played audio content 101 is preferably used when the played audio content 101 is played around the media device 20, for example by another device than the media device 20. In this first way, the played audio content 101 is recorded 120 with the microphone 22 of the media device 20. The record of the played audio content 101 is thus a record of the sound around the media device 20, thus possibly comprising noises coming from ambient sound.

The second way to record 120 the played audio content 101 is preferably used when the played audio content 101 is played by the media device 20, for example with headset or speakers being part of the media device 20 or connected to it through wires or in a wireless way. In such a case, the media device 20 comprises data providing the sound, for example in a file provided by a web radio. In this second way, the played audio content 101 is recorded 120 directly from the data providing the sound, without the microphone 22. The record of the played audio content 101 is thus a record of the sound data located in the media device 20 and used by the first application 28 (Figure 3) to play the sound.

The media device 20 processes 122 the played audio content 101 and thus determines the second fingerprint 105. Then, it preferably deletes 124 the played audio content 101. Several second timestamps 104, geolocations 108 and second fingerprints 105, corresponding to several samples of sounds, may be stored on a memory 26 of the media device 20. They are then transmitted 130 from the media device 20 to the analyzing system 10.

Once the analyzing system 10 has the plurality of first fingerprints 1103a, 1103b, 2103a, 2103b, their corresponding first timestamps 1102a, 1102b, 2102a, 2102b, the second fingerprint 105, and its corresponding second timestamp 104, it can process them to determine 113 from which one 106 of the broadcasted audio contents 1101a, 1101b, 2101a, 2101b the played audio content 101 comes from. If the played audio content 101 is considered as matching one 106 of the broadcasted audio contents 1101a, 1101b, 2101a, 2101b, it is classified 114 as a match to the audio channel 100a, 100b that broadcasted the matched broadcasted audio content 106. An output of the process according to the invention is thus the audio channel 107 that has broadcasted the played audio content 101.

To perform the determination 113, and specifically to perform the comparison, the analyzing system 10 takes into account only the first timestamps 1102a, 1102b, 2102a, 2102b being within a time window that includes the second timestamp 104. It also preferably takes into account the geolocation 108.

In an embodiment of the invention, when the analyzing system 10 compares the second fingerprint 105 with the first fingerprints 1103a, 1103b, 2103a, 2103b, it gives a weight to at least some of the first fingerprints 1103a, 1103b, 2103a, 2103b. For example, the weight for the given first fingerprint 2103b provides a measure of the similarity between the second fingerprint 105 and the given first fingerprints 2103b. The analyzing system 10 provides then several possible matches between the played audio content 101 and several broadcasted audio contents 1101a, 1101b, 2101a, 2101b, each possible match being weighted by the weight of the first fingerprint 1103a, 1103b, 2103a, 2103b that corresponds to the broadcasted audio content 1101a, 1101b, 2101a, 2101b. The matched broadcasted audio content 106 is preferably the one having the highest weight.

In an embodiment of the invention, during the determination 113, the analyzing system 10 takes into account outputs of the process 1 performed on at least one former and/or further played audio content. For example, if the process 1 carried out on a former played audio content 1101a (Figure 4) determined a match with a given audio channel 100a, the weight for said given audio channel 100a (or for the first fingerprints originating from said given audio channel 100a) is increased in the process 1 for the current audio content 2101 a (Figure 4).

In an embodiment of the invention, the analyzing system 10 has a database with the broadcasting locations of the audio channels 100a, 100b, and, during the determination 113, broadcasted audio contents 1101a, 1101b, 2101a, 2101b from audio channels 100a, 100b that are not broadcasted at the geolocation 108 are excluded.

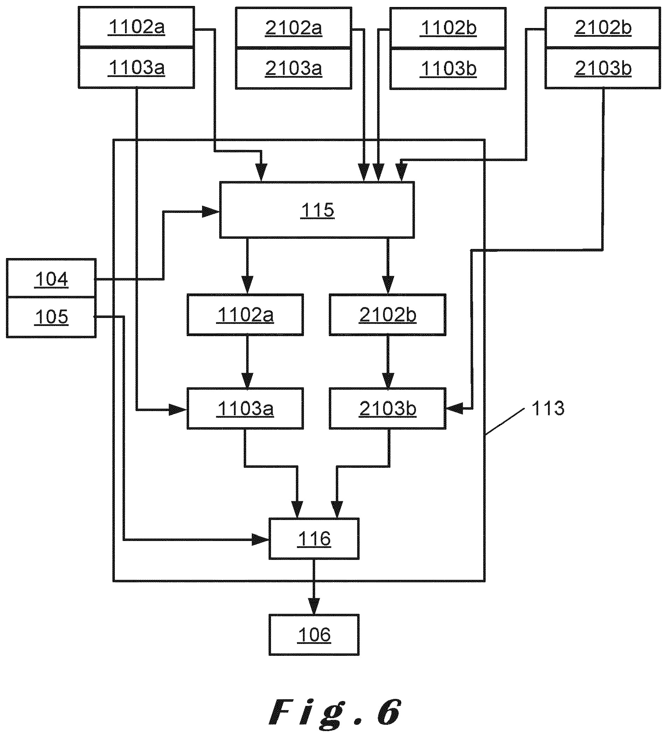

In an embodiment of the invention, the determination 113 comprises the steps described referring to Figure 6. In order to take into account the time window around the second timestamp 104, the analyzing system 10 determines the difference, in absolute value, between the first time stamps 1102a, 1102b, 2102a, 2102b with the second timestamp 104. This gives the time interval between the first timestamps 1102a, 1102b, 2102a, 2102b and the second timestamp 104. It excludes the first timestamps 1102b, 2102a where the difference is higher than a threshold. Only the others first time stamps 1102a, 2102b are considered further. They indicate the first fingerprints 1103a, 2103b to consider further. These selected first fingerprints 1103a, 2103bare compared, during a second selection 116, with the second fingerprint 105. The first fingerprint selected as the most similar to the second fingerprint 105 indicates the matched broadcasted audio content 106.

In an embodiment of the invention, a data base is created on the analyzing system 10 and/or on the broadcasting system 30. Said data base includes a list of the audio channel 107 that has broadcasted the played audio content 101, with the second timestamp 104, the geolocation 108 and an identifier of the media device 20. This makes possible to determine for example that all listeners stop listening a given audio channel in a given area at the same moment everyday, which probably indicates a technical problem occurring only at that moment every day. This makes also possible to obtain a profile of the listening using the media device 20, and obtain some behavioral statistics like the frequency of change of audio channel, for example with respect to the type of broadcast. The broadcaster can dynamically adapts the content of the channel in a reliable and fast way, because current audience measurement methods are unreliable and their results are sent to the broadcasters with a large delay.

In other words, the invention relates to an audio data process 1 to determine from which audio channel 100a, 100b an audio content 101 played on or around a media device 20 comes from. The process involves to determine first audio fingerprints 1103a, 1103b, 2103a, 2103b based on broadcasted audio contents 1101a, 1101b, 2101a, 2101b broadcasted by the audio channel 100a, 100b, and to match one of them with a second audio fingerprint 105 based on the audio content 101 played on or around the media device 20.

Although the present invention has been described above with respect to particular embodiments, it will readily be appreciated that other embodiments are also possible.

## Claims

1. Process (1) for classifying a played audio content (101), and comprising the following steps:
(a) receiving (110), on an analyzing system (10), a plurality of broadcasted audio contents (1101 a, 1101b, 2101a, 2101b), each broadcasted audio content (1101 a, 1101b, 2101a, 2101b) corresponding to an audio channel (100a, 100b),
(b) obtaining (111), on the analyzing system (10), a plurality of first timestamps (1102a, 1102b, 2102a, 2102b), wherein each first timestamp (1102a, 1102b, 2102a, 2102b) corresponds to a broadcasting time of one of the broadcasted audio contents (1101a, 1101b, 2101a, 2101b),
(c) processing (112), on the analyzing system (10), the broadcasted audio contents (1101a, 1101b, 2101 a, 2101b) in order to determine a plurality of first fingerprints (1103a, 1103b, 2103a, 2103b), each of the first fingerprints (1103a, 1103b, 2103a, 2103b) corresponding to one of the broadcasted audio contents (1101 a, 1101b, 2101 a, 2101b) and to one of the first timestamps (1102a, 1102b, 2102a, 2102b),
(d) recording (120), on a media device (20), the played audio content (101),
(e) recording (121), on the media device (20), a second timestamp (104), which is a timestamp of the recording step (120) of the played audio content (101),
(f) processing (122), on the media device (20), the played audio content (101) in order to determine a second fingerprint (105),
(g) transmitting (130), from the media device (20) to the analyzing system (10), the second timestamp (104) and the second fingerprint (105),
(h) determining (113) a match between the played audio content (101) and one (106) of the broadcasted audio contents (1101 a, 1101b, 2101a, 2101b) by comparing, on the analyzing system (10), the second fingerprint (105) with at least part of the plurality of first fingerprints (1103a, 1103b, 2103a, 2103b), wherein only the first fingerprints (1103a, 1103b, 2103a, 2103b) having a corresponding first timestamps (1102a, 1102b, 2102a, 2102b) in a time window with respect to the second timestamp (104) are taken into account, and classifying (114) the played audio content (101) as a match to the audio channel (100a, 100b) corresponding to the matched broadcasted audio content (106).

2. Process according to claim 1, wherein a geolocation (108) of the media device (20) is recorded (123) on the media device (20) at step (e) and transmitted at step (g) from the media device (20) to the analyzing system (10).

3. Process according to any of the preceding claims, wherein, at step (h), the analyzing system (10) determines several possible matches between the played audio content (101) and several of the broadcasted audio contents (1101 a, 1101b, 2101a, 2101b), each match having a weight that indicates the similarity between the second fingerprint (105) and the first fingerprints (1103a, 1103b, 2103a, 2103b).

4. Process according to any of the preceding claims, wherein, during the determination (113) at step (h), the analyzing system (10) takes into account outputs of the process (1) performed on at least one other played audio content (101).

5. Process according to any of the preceding claims, wherein the broadcasted audio contents (1101 a, 1101b, 2101 a, 2101b) are recorded continuously on the analyzing system (10).

6. Process according to any of the preceding claims, wherein the determination (113) of a match at step (h) includes, in this order:
• a first selection (115) of the first fingerprints (1103a, 1103b, 2103a, 2103b) having their first timestamp (1102a, 1102b, 2102a, 2102b) within an interval with respect to the second timestamp (104), and
• a second selection (116), amongst the first fingerprints (1103a, 1103b, 2103a, 2103b) selected by the first selection (115), using a comparison with the second fingerprint (105).

7. Process according to any of the preceding claims, wherein the played audio content (101) is automatically deleted (123) from the media device (20) after step (f), and preferably before step (g).

8. Process according to the preceding claim, wherein the samples of sound including the played audio content (101) are automatically recorded intermittently.

9. Process according to any of the preceding claims, wherein several second timestamps (104) and second fingerprints (105) are stored on a memory (26) of the media device (20) before being transmitted (130) from the media device (20) to the analyzing system (10).

10. Process according to any of the preceding claims, wherein the recording (120), on the media device (20), of the played audio content (101) is done with a microphone (22) of the media device (20).

11. Process according to any of the preceding claims, wherein the recording (120), on the media device (20), of the played audio content (101), is done directly from the data providing the sound.

12. Analyzing system (10) comprising means for carrying out steps (a), (b), (c) and (h) of a process according to any of claims 1 to 12.

13. Data processing arrangement (2) comprising an analyzing system (10) according to claim 12, and a media device (20) comprising means for carrying out steps (d), (e), and (f) of a process according to any of claims 1 to 12, the data processing arrangement (2) being suitable for carrying out step (g).

14. A computer program product comprising instructions which, when the program is executed by an analyzing system (10), cause the analyzing system (10) to carry out steps (a), (b), (c) and (h) of a process according to any of claims 1 to 12.

15. A computer-readable data carrier having stored thereon the computer program product of claim 14.
